Europäisches Patentamt

European Patent Office

Office européen des brevets

(11) Publication number: **0 097 024**
**B1**

(12) **EUROPEAN PATENT SPECIFICATION**

(45) Date of publication of patent specification: **10.09.86**

(51) Int. Cl.⁴: **D 01 G 15/36, F 16 H 7/02**

(21) Application number: **83303325.1**

(22) Date of filing: **08.06.83**

(54) Improvements relating to carding engines.

(30) Priority: **12.06.82 GB 8217129**

(43) Date of publication of application:
**28.12.83 Bulletin 83/52**

(45) Publication of the grant of the patent:
**10.09.86 Bulletin 86/37**

(84) Designated Contracting States:
**CH DE FR GB IT LI**

(56) References cited:
**FR-A-1 040 751**
**GB-A-1 405 712**
**US-A-2 675 709**
**US-A-3 006 035**

(73) Proprietor: **CARDING SPECIALISTS (CANADA) LIMITED**
**417 Russell Hill Road**
**Toronto, Ontario, M4V 2V3 (CA)**

(72) Inventor: **Varga, John Maximilian Jules**
**Royd Lodge 2 Lawrence Road Skircoat Green**
**Halifax West Yorkshire, HX3 0LH (GB)**

(74) Representative: **Geldard, David Guthrie et al**
**URQUHART-DYKES AND LORD 5th Floor, Tower House Merrion Way**
**Leeds, LS2 8PB West Yorkshire (GB)**

Courier Press, Leamington Spa, England.

## Description

This invention relates to carding engines.

The inertia of the main carding cylinder of a carding engine is very high and considerable problems are experienced in providing a suitable drive for this cylinder. One method currently in use as described in GB—A—917,318 is to mount a special form of drive motor, for example a flat motor, on the card frame adjacent to the main cylinder shaft, the motor output shaft being parallel to the cylinder shaft. The cylinder shaft is driven from the motor shaft by a toothed belt, which engages a toothed sprocket on the motor shaft and passes round a smooth surfaced pulley on the cylinder shaft. When the motor is first run to start up the card, slippage occurs between the toothed belt and the pulley on the cylinder shaft, the degree of slippage gradually decreasing as the main cylinder accelerates. Once the working speed of the cylinder is reached the drive runs with little or no slipping. Thus, the high inertia cylinder can be accelerated through a simple slipping drive without the need for expensive specially designed couplings. However, the saving in the cost of the transmission system is completely negated by the special design of motor that is necessary for this system. Space limitations impose stringent design considerations on such motors and it is extremely difficult to provide at reasonable cost motors of adequate power, particularly for high speed carding. Furthermore, the positioning of the motor in the very restricted space that is available renders difficult the fixing of the motor so that its shaft is accurately parallel to the cylinder shaft, causes problems in the provision of power supply to, and control means for, the motor, and makes it extremely difficult to provide a multi-speed drive to the cylinder. Additionally, heat generated by the motor can affect critical settings of parts of the carding engine in the cylinder region.

Document FR—A—1040751 discloses one system that enables a motor to be positioned remote from the cylinder shaft, the motor driving through a first transmission a high speed roller extending the width of the card and cooperating in working relationship with the main cylinder. The main cylinder is driven through a second transmission from the shaft of the high speed roller by a V-belt drive that requires a cumbersome arrangement of three tensioning pulleys to ensure a slip-free drive to the main cylinder. The drive through one of the other rollers of the carding engine is disadvantageous as its very much lower inertia will cause it to be accelerated much more rapidly than the main cylinder and thus result in periods wherein the surface speed relationship of the high speed roller and the main cylinder is other than that desired for ideal operation of the machine. The fact that the shaft of the high speed roller must be positioned away from the shaft of the main cylinder by the sum of the diameter of the two rollers also results in an unnecessarily long path for the transmission to the main cylinder shaft.

The invention seeks to provide a simple and effective drive that avoids the aforesaid disadvantages of the prior art arrangements.

According to the present invention we provide a carding engine having a main cylinder supported by a cylinder shaft, and a drive system for the cylinder shaft that comprises a drive motor remote from the cylinder shaft, a shaft parallel to the cylinder shaft, first transmission means from the motor to the shaft and second transmission means from the shaft to the cylinder shaft, characterised in that the shaft that is parallel to the cylinder shaft is an idler shaft performing no other function and located at one side only of the carding engine and in the immediate vicinity of the cylinder shaft, and that the second transmission means comprises a toothed belt extending between a toothed pulley on the idler shaft and a smooth surfaced pulley on the cylinder shaft and designed to slip relative to the smooth surfaced pulley during startup of the carding engine.

The invention thus solves the problems associated with earlier card drives in a deceptively simple way, by the provision of an idler shaft performing only an idler function in the immediate vicinity of the cylinder shaft and by driving the idler shaft from a remotely positioned motor. Many advantages are realised with this arrangement. The motor may desirably be mounted at a lower part of the frame or be floor-standing. There are thus very few restrictions on the size and type of motor that can be used and motor costs can be very considerably reduced. Motor pulleys are easily accessible and can readily be changed to change the cylinder speed. Heat generated by the motor can easily be dissipated without adversely affecting card settings. The transmission means from the motor to the idler shaft may be a simple flat belt, and the advantage of the slipping drive is not sacrificed, such drive occurring between the idler shaft and the cylinder shaft. Thus, the overall drive system may be constructed to be both much cheaper and at least as efficient as conventional systems.

Preferably the idler shaft is rotatably mounted in bearings supported by a carrier that is mounted on the bearing housing of the cylinder shaft. Using the cylinder shaft bearing housing in this way simplifies the positioning of the idler shaft accurately parallel to the cylinder shaft. The mounting of the carrier on the cylinder shaft bearing housing may be a pivotal mounting about an axis that is also parallel to the axis of the cylinder shaft, in order to facilitate adjustment of the idler shaft relative to the cylinder shaft, means being provided for releasably locking the carrier in position relative to the bearing housing. The idler shaft may be subject to a resilient bias arrangement in order to ensure that tension in the drive belt between the idler shaft and cylinder shaft can be properly set.

A drive system according to the invention is not only suitable for new carding engines, but forms a particularly convenient means for converting the main cylinder drive of existing carding engines. For conversions, the idler shaft will conveniently be supported by a self-aligning bearing system supported from the card frame, rather than being supported from the bearing housing of the cylinder shaft. Such system will allow the axis of the idler shaft to be adjusted to lie parallel to the main cylinder shaft.

In order that the invention may be better understood a particular embodiment of a carding engine drive will now be described in more detail, by way of example only, with reference to the accompanying drawings in which:—

Figure 1 is a schematic side elevation of a main cylinder drive for a carding engine;

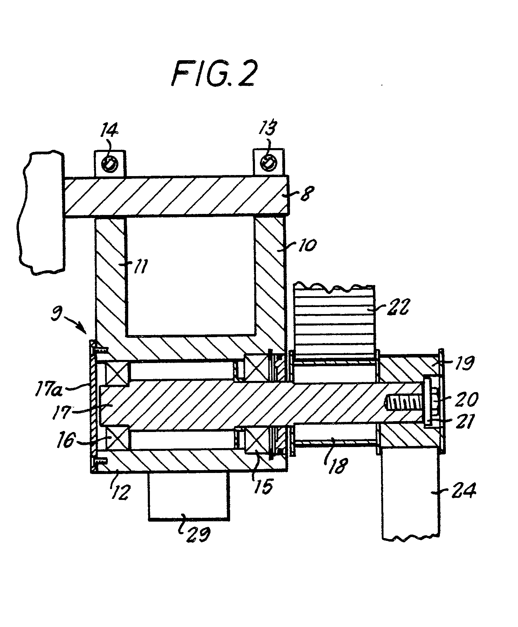

Figure 2 is a part elevation, part section on line II—II of part of the drive of Figure 1; and

Figure 3 shows a tensioning device that may be used in the invention.

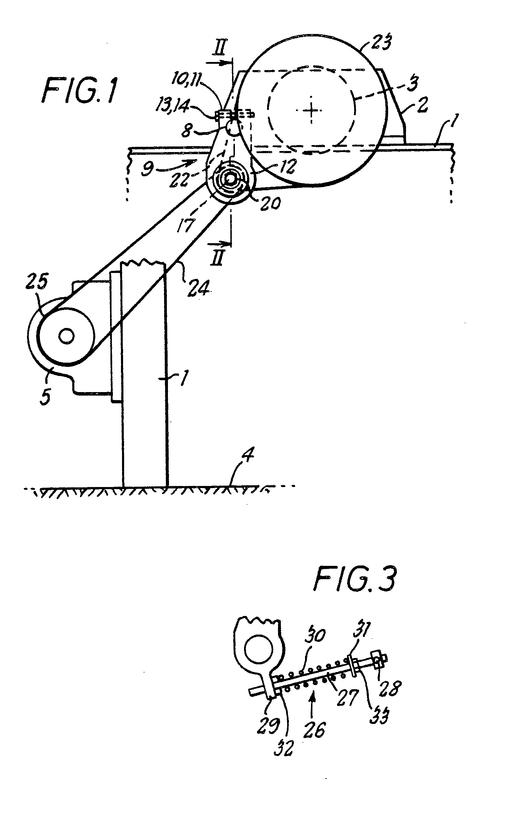

Referring to Figure 1, part of the main frame of a carding engine is shown at 1, the frame supporting a bearing housing 2 for the drive shaft 3 of the main cylinder (not shown) of the carding engine. The frame 1 is supported from the floor 4 in any suitable manner. An electric motor 5 is mounted on a suitable component of the frame 1.

The bearing housing 2 supports a shaft 8, the axis of which extends parallel to the axis of the cylinder shaft 3. The shaft 8 supports a carrier shown generally as 9 and comprising side members 10 and 11 which are integral at their lower ends with a bushing 12. At the upper end, each side member is split and embraces the shaft 8. The split ends can be pulled together by bolts 13 and 14 respectively to secure the carrier in any required angular alignment to the shaft 8. The bushing 12 supports two spaced bearings 15 and 16. An idler shaft 17 is journalled in the bearings 15 and 16, with its axis parallel to the axis of the shafts 8 and cylinder shaft 3. Suitable locating shoulders and circlips hold the idler shaft 17 and bearings axially in position relative to the carrier 9. A cover plate 17a allows access to the bearing assembly.

The idler shaft carries at its outer end two pulleys, a toothed inner pulley 18 and a smooth surfaced outer pulley 19. Both pulleys are secured on the shaft and are releasably held in position by a bolt 20 threaded into the axial end of the idler shaft and a washer 21 engaged in a recess in the outer surface of the pulley 19. A toothed belt 22 extends around the toothed inner pulley 18 and also around a smooth surfaced pulley 23 secured to rotate with the drive shaft 3. A flat drive belt 24 extends from the outer pulley 19 to a drive pulley 25 of the motor 5.

If desired, the apparatus may include a belt tensioning device 26 as shown in Figure 3, incorporating a threaded guide 27 pivotally supported at 28 on the frame of the carding machine and passing through an opening in an extension 29 of that carrier. A compression spring 30 surrounds the guide 27 and lies between end washers 31, 32. A nut 33 threaded onto the guide 27 lies behind washer 31, and the washer 32 bears on the extension 29. By adjusting the nut 33 the spring can be pre-loaded as required, so setting the belt 22 at a required tension. After setting of belt tension, either using the device of Figure 3, or manually if such device is omitted, the carrier is locked to the shaft 8 by tightening the bolts 13 and 14.

In operation, the motor 5 drives the idler shaft 17 by way of the flat belt 24. The idler shaft 17 in turn transmits the drive to the cylinder shaft 3 by way of the toothed belt 22. During starting of the carding engine the toothed belt 22 slips on the smooth surface of the pulley 23 while being driven positively by the toothed pulley 18 on the idler shaft 17. Such slippage is gradually reduced as the main cylinder is accelerated until, at full operating speed, there is little or no slippage in the transmission.

It will be seen that the only transmission equipment necessary in the immediate vicinity of the drive shaft is the small idler shaft and its carrier. The motor itself is positioned remote from the drive shaft and there is thus little restraint on the choice of the design, size and power of the motor that may be used. Furthermore, it is an extremely straight-forward matter to provide the electrical supply to the motor. With this card system all high voltage electrics can thus be located in the same area adjacent to the electrical cabinet. Change of speed can be effected by changing any of the pulleys in the transmission system desirably one of those carried by the idler shaft. Reversal of the drive can be achieved simply by reversing motor polarity by suitable switch means.

It will be understood that there are other ways in which an idler shaft can be supported by a carrier from the cylinder shaft bearing housing, and indeed it is not essential for support to be from that housing. Support could alternatively be from some part of the frame, for example by way of self-aligning bearings to ensure that the axes of the idler shaft and cylinder shaft are parallel. Tensioning means for the idler shaft are not essential, and if present may be other than the tensioning system 26 (shown in Figure 3). The exact location of the motor may, of course, be selected to suit the carding engine concerned. Drive for other elements of the carding engine may be taken from the main cylinder shaft in conventional manner.

**Claims**

1. A carding engine having a main cylinder supported by a cylinder shaft (3), and a drive system for the cylinder shaft that comprises a drive motor (5) remote from the cylinder shaft, a shaft (17) parallel to the cylinder shaft (3), first transmission means (24) from the motor to the shaft (17) and second transmission means (22) from the shaft (17) to the cylinder shaft (3), characterised in that the shaft (17) that is parallel to the cylinder shaft (3) is an idler shaft (17) performing no other function and located at one side only of the carding engine and in the immediate vicinity of the cylinder shaft, and that the second transmission means comprises a toothed belt (22) extending between a toothed pulley (18) on the idler shaft (17) and a smooth surfaced pulley (23) on the cylinder shaft (3) and designed to slip relative to the smooth surfaced pulley (23) during startup of the carding engine.

2. A carding engine according to claim 1 characterised in that the idler shaft (17) is rotatably mounted in bearings (15, 16) supported by a carrier (9) that is mounted on a bearing housing (2) for the cylinder shaft (3).

3. A carding engine according to claim 2 characterised in that the carrier (9) is mounted on the bearing housing (2) for pivotal movement about an axis (of shaft 8) parallel to the axis of the cylinder shaft (3), and means (13, 14) are provided for releasably locking the carrier in position relative to the bearing housing.

4. A carding engine according to claim 2 or claim 3 characterised by means (26) for biasing the carrier (9) so that the idler shaft (17) is urged away from the cylinder shaft (3) in order to tension the toothed belt (22).

## Revendications

1. Une machine de cardage disposant d'un cyclindre principal supporté par un arbre cylindrique (3), et un système d'entraînement pour l'arbre du cylindre comprenant un moteur d'entraînement (5) éloigné de l'arbre du cylindre (3), un arbre (17) parallèle à l'arbre du cylindre (3), un premier moyen de transmission (24) allant du moteur à l'arbre (17) et un second moyen de transmission (22) allant de l'arbre (17) à l'arbre du cylindre (3), caractérisée en ce que l'arbre (17) qui est parallèle à l'arbre du cylindre (3) est un arbre fou (17) qui rende aucune autre fonction et est posé seulement à un côté de la machine de cardage et à la proximité immédiate de l'arbre du cylindre, et en ce que le second moyen de transmission comprend une courroie dentée (22) s'étendant entre une poulie dentée (18) sur l'arbre fou (17) et un poulie à surface lisse (23) sur l'arbre du cylindre (3) et qui est désigné à glisser relative à la poulie à surface lisse (23) pendant la mise en marche de la machine de cardage.

2. Une machine de cardage suivant la revendication 1, caractérisée en ce que l'arbre fou (17) et fixé de façon rotative sur des paliers (15, 16) supportés par un châssis de suspension (9) qui est fixé sur un carter des paliers (2) pour l'arbre du cylindre.

3. Une machine de cardage suivant la revendication 2, caractérisée en ce que le châssis de suspension (9) est montés sur le carter des paliers (2) pour un mouvement de pivots autour d'une axe (de l'arbre 8) parallèle à l'axe de l'arbre du cylindre (3), et des moyens (13, 14) prévus au blocage relâchable du châssis de suspension en position relative au carter des paliers.

4. Une machine de cardage suivant la revendication 2 ou 3, caractérisée par un moyen (26) pour l'inclinaison du châssis de suspension (9) visant à ce que l'arbre fou (17) est poussé loin de l'arbre du cylindre (3) en vue de tendre la courroie dentée (22).

## Patentansprüche

1. Kardiermaschine mit einem auf einer Zylinderwelle (3) gelagerten Hauptzylinder und einem Antriebssystem für die Zylinderwelle, bestehend aus einem von der Zylinderwelle entfernt gelagerten Antriebsmotor (5), einer zur Zylinderwelle (3) parallelen Welle (17), einem ersten Übertragungsmittel (24) vom Motor zur Welle (17) und einem zweiten Übertragungsmittel (22) von der Welle (17) zur Zylinderwelle (3), dadurch gekennzeichnet, daß die zur Zylinderwelle (3) parallel liegende Welle (17) eine Vorgelege-Welle (17) ohne andere Funktion ist und lediglich an einer Seite der Kardiermaschine und unmittelbar an die Zylinderwelle angrenzend angeordnet ist, und daß das zweite Übertragungsmittel einen Zahnriemen (22) aufweist, der zwischen einer Zahnscheibe (18) auf dem Vorgelege (17) und einer eine glatte Umfangsfläche aufweisenden Scheibe (23) auf der Zylinderwelle (3) vorgesehen ist und in bezug auf die Scheibe (23) während des Anlaufes der Kardiermaschine Schlupf hat.

2. Kardiermaschine nach Anspruch 1, dadurch gekennzeichnet, daß das Vorgelege (17) in Lagern (15, 16) an einem Träger (9) drehbar gelagert ist und daß der Träger an einem Lagergehäuse (27) für die Zylinderwelle (3) angeordnet ist.

3. Kardiermaschine nach Anspruch 2, dadurch gekennzeichnet, daß der Träger (9) am Lagergehäuse (2) um eine zur Achse der Zylinderwelle (3) parallele Achse (von Welle 8) drehbeweglich angeordnet ist, und daß Mittel (13, 14) zur lösbaren Verriegelung des Trägers in bezug auf das Lagergehäuse vorgesehen sind.

4. Kardiermaschine nach Anspruch 2 oder 3, gekennzeichnet, durch Mittel (26) zur Vorspannung des Trägers (9) in der Weise, daß die Vorgelege-Welle (17) von der Zylinderwelle (3) zwecks Spannung des Zahnriemens (22) weggedrückt ist.

FIG.1

FIG.3

# FIG.2